# EUROPEAN PATENT APPLICATION

(11) **EP 1 398 966 A1**
(43) Date of publication of application: **17.03.2004**
(21) Application number: 02078792.5
(22) Date of filing: 05.09.2002
(51) Int. Cl.: H04N 7/16, H04N 7/173, H04N 5/00

(54) **Transaction system**

(71) Applicant: Irdeto Access B.V., 2132 HD Hoofddorp (NL)
(72) Inventor: Sullivan, Alan John, 2152 Northwold (ZA)
(74) Representative: Metman, Karel Johannes

(57) **Abstract**

A system for effecting a transaction includes a head-end (3), a communications network (4), and a receiver (1), capable of receiving digital information, including content data from the head-end (3) through the network (4), and of making the content data available to a user on a display device (2). The receiver (1) further includes an interface (7) to a subscriber secure device (6). The system has the capability to create a transaction token, incorporating a first code uniquely identifying the subscriber secure device (6). The receiver (1) is programmed to make the first code available on the display device (2). The system further includes a terminal (9,10;12) for creating a transaction token, including an interface (10) to a client secure device (11;13). The terminal (9-12) includes a user interface for entering the first code, and is arranged to create the transaction token from the entered first code in co-operation with the client secure device (11;13).

## Description

### Background of the invention

The invention is generally concerned with the carrying out of electronic transactions, and more specifically with carrying out electronic transactions in a system including a head-end, a communications network and a receiver, capable of receiving content data from the head-end.

In particular, the invention relates to a system for effecting a transaction, including a head-end, a communications network, and a receiver, capable of receiving digital information, including content data from the head-end through the network, and of making the content data available to a user on a display device, which receiver further includes an interface to a subscriber secure device, the system having the capability to create a transaction token, incorporating a first code uniquely identifying the subscriber secure device.

The invention also relates to a method of enabling a transaction in a system including a head-end, a communications network, and a receiver, capable of receiving digital information, including content data, from the head-end through the network and of making the content data available to a user on a display device, which receiver further includes an interface to a subscriber secure device.

The invention also relates to a computer program having the potential, when run on a system, including a receiver and a subscriber secure device, connected to the receiver through an interface, to enable the system to execute such a method.

The invention also relates to a system, including a receiver, capable of receiving digital information, including content data, from a head-end through a network, and a subscriber secure device, connected to the receiver through an interface.

The invention also relates to a subscriber secure device, suitable for use in such a system.

The invention also relates to a terminal for creating a transaction token, including an interface to a client secure device, and arranged to create a transaction token incorporating a first code, identifying a subscriber secure device.

The invention also relates to a client secure device, suitable for use in such a terminal.

The invention lastly relates to a computer program having the potential, when run on a terminal, including a client secure device and a user interface, to provide the system including the terminal and the client secure device with the functionality of such a terminal.

Examples of the above-mentioned methods and systems are known from the area of pay-per-view television. In the known system, a stream of data, identifying available premium content, is embedded in a digital broadcast signal. The broadcast signal is received by a receiver, which separates this data from content data in the broadcast signal. The data is used to create a graphical user interface, which the viewer can use to select content he would like to purchase. The selection information is used by the receiver to generate a message to the head-end. The system comprises a return channel, through which this message is transferred to the head-end. A conditional access module - a secure device comprising, for example, a PCMCIA module or a smart card - is connected to the receiver via an interface. As a connection is set up through the return channel between the head-end and a specific receiver, which is identified by the conditional access module, the head-end is aware of the identity of the purchaser. Entitlement Management Messages, subsequently sent with the content data enable the receiver, with the conditional access module, to make the acquired content available to the user.

In the known system, a return channel to the head-end is necessary, in order to communicate the identity of the subscriber secure device to the head-end. The user can only order content using the receiver, and must have the secure device inserted into the receiver to do so.

### Summary of the invention

The invention provides a system and methods of the type mentioned above, which allow a transaction to be tied to a user of a receiver, without needing a return channel from the receiver to the head-end.

The invention achieves this by providing a system for effecting a transaction, including a head-end, a communications network, and a receiver, capable of receiving digital information, including content data from the head-end through the network, and of making the content data available to a user on a display device, which receiver further includes an interface to a subscriber secure device, the system having the capability to create a transaction token, incorporating a first code uniquely identifying the subscriber secure device, wherein the receiver is programmed to make the first code available on the display device, and the system further includes a terminal for creating a transaction token, including an interface to a client secure device, wherein the terminal includes a user interface for entering the first code, and is arranged to create the transaction token from the entered first code in co-operation with the client secure device.

In this system, no return channel is necessary from the receiver to the head-end. A transaction is effectively tied to a subscriber secure device, but the subscriber secure device is not actively needed to generate the token. Indeed, a user of a client secure device and terminal can order a product for someone else. This other person is identified by the first code, which is tied to the subscriber secure device.

According to another aspect of the invention, a method of enabling a transaction in a system including a head-end, a communications network, and a receiver, capable of receiving digital information, including content data, from the head-end through the network and of making the content data available to a user on a display device, which receiver further includes an interface to a subscriber secure device, is provided, wherein a first code for creating a transaction token, uniquely identifying the subscriber secure device, is made available to the user on the display device.

Thus, the user has possession of the first code. The first code can be provided to the broadcaster via other ways. The service provider operating the head-end, who has a database of users and their subscriber secure devices, can tie the product bought to a particular user.

Preferably, a second code, identifying a product to be ordered, and included in the content data, is made available to the user on the display device.

Thus, the ordering of products becomes asynchronous. It is no longer necessary that the receiver sends back product identifications embedded in the content stream as they are received, for example to release a movie for viewing. Instead, products can be ordered and paid for independently of the transmission from the head-end to the receiver.

According to another aspect of the invention, a computer program is provided having the potential, when run on a system, including a receiver and a subscriber secure device, connected to the receiver through an interface, to enable the system to execute a method according to the invention.

Thus, the system including the receiver and a subscriber secure device, can be upgraded to carry out the method of the invention.

According to a further aspect of the invention, a system is provided, including a receiver, capable of receiving digital information, including content data, from a head-end through a network, and a subscriber secure device, connected to the receiver through an interface, wherein the system is arranged to carry out the method according to the invention.

The system brings with it the advantages of the method according to the invention.

According to yet another aspect of the invention, a terminal for creating a transaction token is provided, including an interface to a client secure device, and arranged to create a transaction token incorporating a first code, identifying a subscriber secure device, wherein the terminal includes a user interface for entering the first code, and is arranged to create the transaction token from the entered first code in co-operation with the client secure device.

Using this terminal, and the first code, provided by the system for enabling a transaction according to the invention, a user is able to order a product by creating a token.

Preferably, the terminal is arranged to include a digital signature with the transaction token, in co-operation with the client secure device.

Thus, the transaction token, which is proof that the user has ordered a product and wished to pay for it, cannot later be repudiated.

Preferably, the terminal includes a user interface for entering a personal identification code, and is arranged to generate the digital signature using the personal identification code in co-operation with the client secure device.

Thus, possession of the terminal and the client secure device is not sufficient to authorise a transaction. The active involvement of a particular user, who knows the personal identification code, is required.

According to yet another aspect of the invention, a client secure device is provided, suitable for use in a terminal according to the invention, and arranged to create at least part of the transaction token.

By a secure device, a device is meant that includes a microprocessor, data memory, and certain tamper proof features. These features can be physical, preventing data in the device being probed, and/or cryptographic, preventing the device from making the data available in unencrypted form. Using a secure device to create at least part of the transaction token prevents false tokens, i.e. unauthorised transactions, being created.

According to a last aspect of the invention, a computer program is provided having the potential, when run on a terminal including a client secure device and a user interface, to provide the system including the terminal and the client secure device with the functionality of a terminal according to the invention.

Thus, such a program is able to provide, for instance, a mobile phone or computer, with the functionality of the terminal according to the invention.

The invention will now be explained in further detail with reference to the accompanying drawings.

### Brief description of the drawings

Fig. 1 gives an overview of a complete transaction system, in which the invention is embodied.
Fig. 2 comprises screen views of the television set of Fig. 1.
Fig. 3 comprises screen views of the mobile phone of Fig. 1.

### Specific description

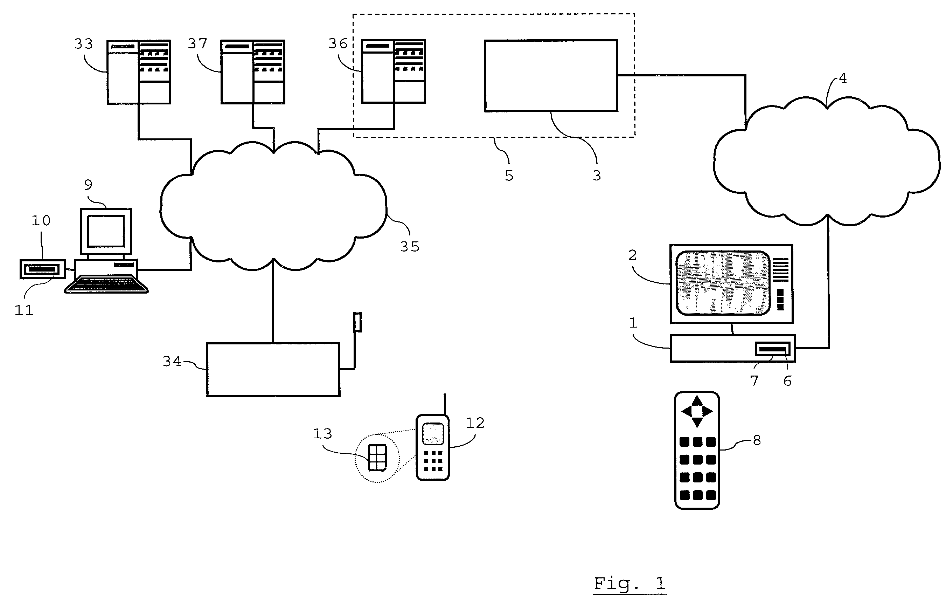

A complete overview of the way in which a transaction token is created, and of its subsequent processing, will be given with reference to Fig. 1. A subscriber to a pay TV service has a set top box 1 at his disposal. The set top box 1 is connected to a television set 2. It receives digital information, e.g. films, data, audio or video files from a head-end 3 through a broadcast network 4, to which it is connected. Reference number 5 denotes a service provider entity, operating the pay TV system.

The information received by the set-top box 1 is made available to the user, by conversion into a video signal for the television set 2. The set-top box 1 is merely an example of a receiver suitable for use in the present invention. A suitably programmed computer, games console or digital television set can also take on the role of a receiver in the system of the invention.

The digital information is protected by a conditional access system. Such systems are well known and not described in any great detail here. It suffices that the data broadcast from the head-end 3 also contains entitlement messages, which identify one or more users that are allowed to receive a certain program or file. More specifically, the entitlement messages are tied to subscriber secure devices, issued to subscribers of the pay TV system. Again, such secure devices, which can take the form of a PCMCIA card, but in this case takes the form of a subscriber smart card 6, comprising a processor and memory, and protected against tampering, are well known. The set-top box 1 comprises a slot 7, which is part of the hardware comprised in an interface between the set-top box 1 and the subscriber smart card 6.

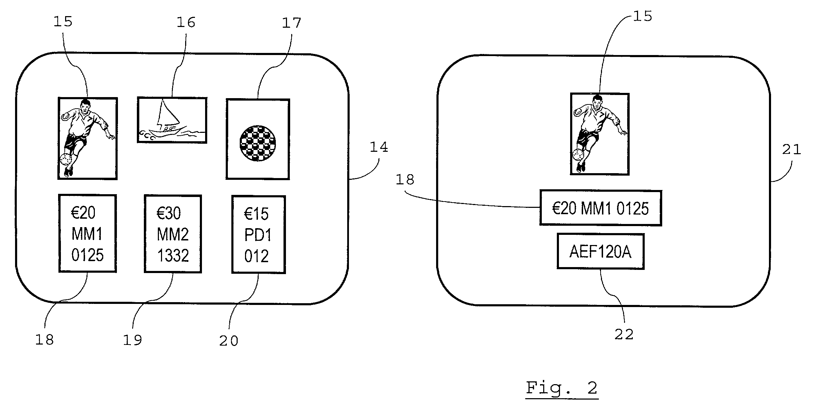

The set-top box 1 is also provided with a user interface, comprising software for making selection screens available on the screen of the television set 2 and a remote control 8, with which the user can enter commands. Aspects of the user interface that are specific to the invention will be explained in further detail below with reference to Fig. 2.

The set-top box 1 has an operating system and memory, storing a plurality of applications, including an application enabling it to play a role in carrying out the method of the invention. Likewise, the subscriber smart card 6 has an operating system and one or more application programs, which a secure processor in the module can run. As an example, both the subscriber smart card 6 and the set-top box 1 may comprise a virtual processor for interpreting platform independent bytecode, downloaded from the head-end 3. Thus, for example, software provided as part of the invention can be downloaded to allow the set-top box 1 and subscriber smart card 6 to be upgraded.

The broadcast network 4 can be a cable, terrestrial or satellite network. Although the set-top box 1 may be equipped with a modem for a telephone network, the invention does not need a modem to provide a return channel to the head-end 3. Especially in cases where terrestrial or satellite broadcasts are used, this is an advantage, since these types of networks commonly do not allow return traffic of data to the head-end 3.

Previously, where no return channel was available, subscribers wishing to buy premium content had to subscribe by sending a paper form to the service provider entity 5, with credit card details, for example. The service provider entity 5 would then present these details to his bank, which would clear the transaction with the subscriber's bank. The invention allows a much faster and efficient way of effecting a transaction. The subscriber, or someone wishing to order a product for the subscriber, is provided with a client secure device, which, in conjunction with a suitable terminal, is used to create a transaction token. The token is provided directly to a system operated by an authority that can authorise payment. The token also comprises details regarding the subscriber's identity, so that only one token suffices, in principal, to both authorise payment and identify the recipient of the product.

Several types of devices can function as the terminal according to the invention. For example, in Fig. 1, a personal computer 9 is connected to a smart card reader 10, as part of an interface to a client smart card 11. Instead of the personal computer 9, a point of sale terminal could be used. In another particularly favoured embodiment a mobile phone 12 is used. The mobile phone 12 comprises a screen and buttons for entering commands, as well as an interface to a Subscriber Identity Module (SIM)-card 13. The latter functions as a client secure device in the sense of the invention. In this description, it will be assumed that the mobile phone 12 is used to create the transaction token.

Again, both the SIM-card 13 and the mobile phone 12 are equipped with an operating system and one or more application programs. The invention provides special application programs that allow the mobile phone 12, in co-operation with the SIM-card 13, to create a transaction token. Because the SIM-card 13 is a client secure device, and thus protected against tampering, it is preferably used to create at least the security-sensitive parts of the transaction token.

Preferably, the head-end 3 broadcasts video information relating to programs and products being offered for sale, on a special channel, to which the set-top box 1 can tune in. A simplified example of a first screen view 14 that presents itself to a viewer after he has tuned in to this channel, is shown in Fig. 2. The screen view 14 comprises an icon 15 representing coverage of a sports event, an icon 16 representing a film and an icon 17 representing a pizza.

Below the icons 15,16 representing coverage of a sports event and a film, fields 18,19 show the price of the content, the channel on which it is broadcast, and a product code, relating to the viewing event. Below the icon 17 representing a pizza, a field 20 shows the price, supplier and product code. This product code, identifying a product to be ordered, will be needed to create the transaction token, with which the product is ordered and payment for it is authorised.

Assuming the user wishes to order the coverage of the sports event, he will use the remote control 8 to direct a cursor to the icon 15, or otherwise enter a selection command. A second screen view 21 then presents itself. This screen view 21 also comprises the icon 15, the field 18 with product details. It further comprises a field 22, showing a subscriber code. The subscriber code, which is generated upon receipt of a user command, uniquely identifies the subscriber secure device, i.e. the subscriber smart card 6. It is generated by the subscriber smart card 6, which performs a cryptographic operation on an identification code stored in the subscriber smart card 6. This stored code could, for instance, be the code used to address a receiver comprising the subscriber secure device through by the head-end 3. By encrypting this code, it is ensured that this code is not available in the open. It will be understood that the cryptographic algorithm or a key for it, may be varied over time or from transaction to transaction, as a further security measure.

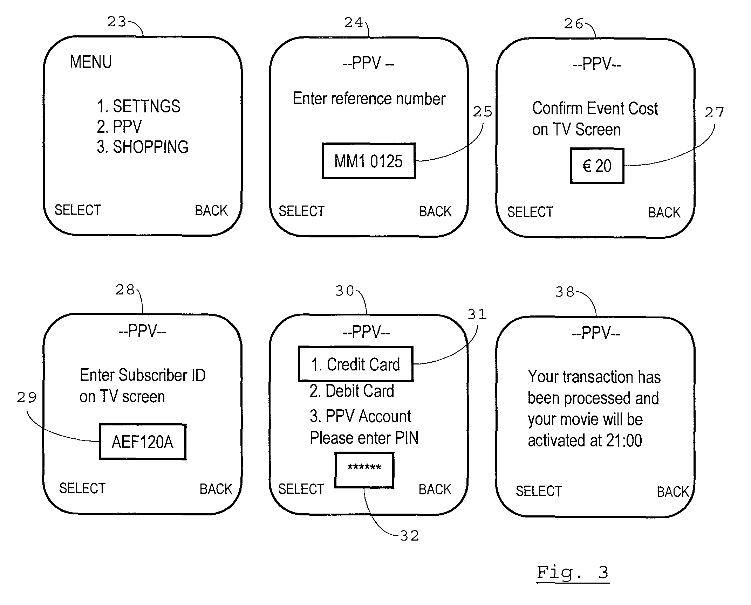

Referring now to Fig. 3, several screen views 23,24,26,28,30,38 of the mobile phone 12 screen are shown. In the following, it will be assumed that the mobile phone 12 provides a user interface comprising screen views, cursor keys for selecting elements displayed on the screen, and/or number keys for the same purpose. Variations are possible, as is well known from the art. A first screen view 23 provides a menu of mobile phone functions, including pay per view. Selection of the pay per view option leads to the emergence of a second screen view 24, comprising a field 25 for entering the product code, which identifies the product to be bought, in this case coverage of the sports event. The user enters the product code comprised in the field 18 of the first and second screen views 14,21 shown in Fig. 2.

After confirmation, the process moves on to a third screen view 26 (see Fig. 3). The third screen view 26 is part of a user interface for entering further details of the transaction. These details are incorporated in the transaction token. They allow a double check of the product code, in case the user has entered the wrong product code in the field 25. In the present example, the third screen view 26 comprises a field 27 for entering the price of the product. When the transaction token is processed, a check can be carried out to ensure that the user has not ordered a product that is more expensive than he thought.

A fourth screen view 28 comprises a field 29 for entering the subscriber code. This is the code provided in field 22 of the second screen view 21 of Fig. 2.

As mentioned before, the token created as part of the invention allows both identification of the subscriber and authorisation of the transaction. In a fifth screen view 30 (see Fig. 3), the user can now arrange for payment. A selection frame 31 allows selection of a mode of payment. In this example, the user has the option of paying by credit card, debit card, or by deduction from his pay per view account, maintained by the service provider entity 5. The selection is used to determine the format of the transaction token, and to whom it should be sent.

In the present example, the token comprises a header, specifying i.a. the destination of the token. This may be a header specifying the IP address of a server that is to process the token. The token further comprises a payload, including the product code, the subscriber code and any further details of the transaction, like the price of the product. The payload may be encrypted, in which case it is encrypted, using a key stored in the client secure device, by the secure device. A symmetric encryption algorithm, for instance the DES-algorithm is useful, because processing is fast. Preferably, a digital signature is provided with the transaction token. The digital signature is also created by the client secure device. In a convenient implementation, the signature is created by performing a cryptographic operation on all or part of the payload, using a private key from a public-private key pair, stored in a memory module in the client secure device. Again, generation of the digital signature is preferably carried out in the client secure device (e.g. the SIM-card 13 in the mobile phone 12). The algorithm and/or key that are used may depend on the mode of payment that has been selected using the selection frame 31.

Preferably, part or all of the key used to create the digital signature is formed by a PIN code. A field 32 is provided in the fifth screen view 30, in which the user can enter the PIN code.

The token generated by the mobile phone 12 and SIM card 13 is provided to a transaction server 33 (see Fig. 1). In the example of Fig. 1 the token is transferred via a cell phone gateway 34, through the Internet, denoted by reference number 35.

The transaction server 33 processes the token by first consulting a client database in a server 36 with a client database, which is operated by the service provider entity 5. Once it has been determined that the subscriber secure device is a valid device, the token can also be passed to a financial service server 37. The financial service server 37 may belong to a bank, for example. It is arranged to verify the authenticity of the token. For this, it uses the public key associated with the private key used to sign the token. If the token is authentic, then the financial service provider can clear the transaction. It will also confirm this fact in a message to the transaction server 33. The subscriber identity can then be notified to the pay TV operator, who can release coverage of the sports event for viewing by the subscriber. Of course, the functions of the transaction server 33 and financial service server 37 can be combined into one.

Preferably, the transaction server 33 will return a confirmation message to the mobile phone 12. Receipt of this message results in display of a sixth screen view 38 (see Fig. 3). Thus, receipt of the confirmation message is visually indicated to the user. An audible or tactile signal could also be used for this purpose.

The invention is not limited to the embodiments described above, which can be varied in a number of ways within the scope of the claims. For instance, the token can be provided directly to a financial service server for verification of its authenticity. There may be a secure channel between the transaction server and the financial service server. Additionally, the screen views may differ per embodiment, both in order and content.

## Claims

1. System for effecting a transaction, including a head-end (3), a communications network (4), and a receiver (1), capable of receiving digital information, including content data from the head-end (3) through the network (4), and of making the content data available to a user on a display device (2), which receiver (1) further includes an interface (7) to a subscriber secure device (6), the system having the capability to create a transaction token, incorporating a first code uniquely identifying the subscriber secure device (6), wherein the receiver (1) is programmed to make the first code available on the display device (2), and the system further includes a terminal (9,10;12) for creating a transaction token, including an interface (10) to a client secure device (11;13), wherein the terminal (9,10;12) includes a user interface for entering the first code, and is arranged to create the transaction token from the entered first code in co-operation with the client secure device (11;13).

2. Method of enabling a transaction, in a system including a head-end (3), a communications network (4), and a receiver (1), capable of receiving digital information, including content data, from the head-end (3) through the network (4) and of making the content data available to a user on a display device (2), which receiver (1) further includes an interface (7) to a subscriber secure device (6), wherein a first code for creating a transaction token, uniquely identifying the subscriber secure device (6), is made available to the user on the display device (2).

3. Method according to claim 2, wherein a second code, identifying a product to be ordered, and included in the content data, is made available to the user on the display device (2).

4. Computer program having the potential, when run on a system, including a receiver (1) and a subscriber secure device (6), connected to the receiver (1) through an interface (7), to enable the system to execute a method according to claim 2 or 3.

5. System, including a receiver (1), capable of receiving digital information, including content data, from a head-end (3) through a network (4), and a subscriber secure device (6), connected to the receiver (1) through an interface (7), wherein the system is arranged to carry out a method according to claim 2 or 3.

6. Subscriber secure device, suitable for use in a system according to claim 5, wherein the subscriber secure device (6) includes a further identification code, and is arranged to calculate the first code by encrypting the further identification code.

7. Terminal for creating a transaction token, including an interface (10) to a client secure device (11;13), and arranged to create a transaction token incorporating a first code, identifying a subscriber secure device (6), wherein the terminal includes a user interface for entering the first code, and is arranged to create the transaction token from the entered first code in co-operation with the client secure device (11;13).

8. Terminal according to claim 7, including a user interface for entering a second code, identifying a product to be bought, wherein the terminal is arranged to incorporate the second code in the transaction token in co-operation with the client secure device (11;13).

9. Terminal according to claim 7 or 8, wherein the terminal is arranged to include a digital signature with the transaction token in co-operation with the client secure device (11;13).

10. Terminal according to claim 9, wherein the terminal includes a user interface for entering a personal identification code, and is arranged to generate the digital signature using the personal identification code in co-operation with the client secure device (11;13).

11. Terminal according to any one of claims 7-10, wherein the terminal includes a user interface for entering further details of the transaction, and is arranged to incorporate the entered details in the token in co-operation with the client secure device (11;13).

12. Terminal according to any one of claim 7-11, arranged to establish a communications link with an arbitrator system (33,37,37), and to transfer the token through the communications link to the arbitrator system (33,36,37).

13. Terminal according to claim 12, wherein the terminal is arranged to receive a confirmation of the transaction from the arbitrator system (33,36,37), and has the capability of indicating receipt of the confirmation to the user.

14. Client secure device, suitable for use in a terminal according to any one of claims 7-13, and arranged to create at least part of the transaction token.

15. Computer program having the potential, when run on a terminal (9,10;12) including a client secure device (11;13) and a user interface, to provide the system including the terminal (9,10;12) and the client secure device with the functionality of a terminal according to any one of claims 7-13.
